# EUROPEAN PATENT SPECIFICATION

(11) **EP 4 422 987 B1**
(45) Date of publication and mention of the grant of the patent: **22.10.2025**
(21) Application number: 22809536.0
(22) Date of filing: 24.10.2022
(51) Int. Cl.: B65D 65/46, B65D 81/38

(54) **BIODEGRADABLE CONTAINER**
BIOLOGISCH ABBAUBARER BEHÄLTER
RÉCIPIENT BIODÉGRADABLE

(30) Priority: 25.10.2021 IT 202100027362
(43) Date of publication of application: 04.09.2024
(73) Proprietor: Green Innova S.r.l., 00198 Roma (IT)
(72) Inventor: SPAGNUOLO, Maria Agnese, 00191 Roma (RM) (IT); SIMON, Francesco, 00191 Roma (RM) (IT); STORTO, Gianluigi, 00168 Roma (RM) (IT); LATESSA, Giuseppe, 00133 Roma (RM) (IT)
(74) Representative: Santi, Filippo
(86) International application number: PCT/IT2022/050283
(87) International publication number: WO 2023/073741

(56) References cited:
- WO-A1-2020/126665
- DE-U1- 9 308 730
- JP-A- H05 310 271
- MESÍAS MARTA ET AL: "Reassessment of acrylamide content in breakfast cereals. Evolution of the Spanish market from 2006 to 2018", FOOD CONTROL, BUTTERWORTH, LONDON, GB, vol. 105, 1 November 2019 (2019-11-01), pages 94 - 101, XP085733698, ISSN: 0956-7135, [retrieved on 20190521], DOI: 10.1016/J.FOODCONT.2019.05.026

## Description

The present invention relates to a biodegradable container.

In particular, the object of the present invention is a biodegradable container for transporting and storing foods such as ice cream or other types of foods, made of eco-friendly materials which are free of chemical synthesis products, food-based and not harmful to humans and animals. Said biodegradable container can also be used for storing and transporting non-food materials, such as for example electronic components, metal components, fabrics and in general consumer goods of all kinds.

As is known, the "food packaging" plays an essential role in the food industry, which is one of the most important supply chains in the world and uses a considerable number of materials of various types.

The packaging of a food, in fact, does not have the sole function of containing the product, but must ensure a series of technical characteristics to preserve its organoleptic properties, guarantee its healthiness and protect it from external agents and any interactions with the material of the packaging itself. For these reasons, creating packaging for the food sector requires a constant attention to the innovation of materials and an excellent knowledge of the product characteristics, in order to always guarantee high quality standards.

The purposes of food packaging go far beyond simply containing food and must meet a series of requirements that make the following technological aspects anything but secondary:
- properly containing the food product;
- protecting the food from mechanical damages;
- preventing or delaying the biological and physical deterioration of the food;
- preventing negative effects on the environment;
- facilitating transport and warehousing/storage;
- offering information opportunities to the consumer.

In this context, to date, most of the structures for transporting food are made in various shapes and colours, using plastic-type materials, such as polystyrene foam, polystyrene, polyethylene, polypropylene and the like, or aluminum sheets of various thickness. Although these materials have overall interesting properties and acceptable costs, they bring a series of issues that go far beyond these advantages and are mainly related to the development of risks for the environment, not being biodegradable or compostable, and to the proliferation of ancillary costs related to the recycling of these materials or their disposal.

Specifically for storing and transporting ice cream sold in bulk, such containers must also have specific properties: being thermally insulating, so as to protect a cold food from the external environmental heat; being chemically inert, so as not to release dangerous substances that could pass into the food and consequently alter its taste or safety; having a low weight, in order to reduce transport costs; having shapes allowing their simple overlapping, in order to reduce the volumes needed for storage; being of low-cost. The simultaneous demand for these properties has meant that, now for many decades, the material par excellence for these containers was the polystyrene foam (also called expanded polystyrene), produced by the chemical industry according to processes that have long been known. Polystyrene foam, in fact, has an excellent (i.e. low) coefficient of thermal conductivity, a low specific weight, it can be easily moulded in shapes suitable for being simply spatially overlapped, in order to reduce its dimensions during storage, and has a low cost.

However, polystyrene foam presents some problems. It belongs to the class of non-eco-friendly, non-compostable plastic substances and its persistence after use in the environment is such as to represent an environmental issue of absolute relevance.

Secondly, polystyrene foam, like other plastic materials, once released into the environment, undergoes subsequent mechanical fracture phenomena which reduce it, at the end of the process, in the physical state of micro or even nano powders that can enter the food cycle of living organisms and thus also end up in the human body, with effects that can be harmful.

Thirdly, in case of fire, polystyrene releases into the environment harmful substances (toxic gases) resulting from the thermal degradation of plastic and easily spreads the fire to nearby materials. Finally, the production of polystyrene foam containers, due to the technical difficulties and associated costs, is centralised in large manufacturing companies and cannot be entrusted to the end-users, who use them to sell their goods. This involves important logistical problems, such as storage difficulties and high transport costs, which in the end heavily affect the cost of the final food products. Furthermore, centralising their production, in the hands of a few and large chemical companies, has caused their price on the market to grow at very high levels.

The EU Directive 2019/904 of 5/6/2019 "on the reduction of the impact of certain plastic products on the environment", article 5, prohibits Member States from placing on the market single-use plastic products, listed in part B of the annex to the same Directive, and non-biodegradable plastic products. Part B of the annex lists the products that can no longer be placed on the market. In point 7 these include: "food containers made of expanded polystyrene, i.e. containers with or without a cover, used for food:
a) intended for immediate consumption either on-the-spot or take-away;
b) generally consumed directly from the receptacle;
c) ready to be consumed without any further preparation such as cooking, boiling or heating".

In art. 2 "field of application", the aforementioned EU Directive specifies that the prohibition of release for consumption applies not only to single-use plastic products referred to in part B (see above), but also to products made from oxo-degradable plastic. According to the Directive, point 3 of art. 3, oxo-degradable plastic means plastic materials containing additives which, through oxidation, lead to the fragmentation of the plastic material into micro-fragments or to chemical decomposition.

In addition, according to the European Parliament, "even if plastic plays a useful role in the economy and provides essential applications in many sectors, its growing use in short-lived applications, which are not designed for re-use or cost-effective recycling, means that related production and consumption patterns have become increasingly inefficient and linear. The significant negative environmental, health and economic impact of certain plastic products calls for the setting up of a specific legal framework to effectively reduce those negative effects. This Directive promotes circular approaches that give priority to sustainable and non-toxic re-usable products and re-use systems, rather than to single-use products, aiming first and foremost to reduce the quantity of waste generated." The Directive concludes that "the objectives of this Directive are to prevent and reduce the impact of certain single-use plastic products, products made from oxo-degradable plastic and fishing gear containing plastic, on the environment and on human health, and to promote the transition to a circular economy with innovative and sustainable business models, products and materials."

U.S. Patent Document n. 178,624 filed by Rausch in 1950, entitled "Fragile article package in popped corn" intends to optimise a food container by inserting loose popcorn inside it with the aim of facilating the transport of a food.

U.S. Patent Document n. 5,300,333 filed by Wilkerson et al. in 1994, entitled "Biodegradable insulated food container", intends to define a container for the storage and containment of foods based on simple popcorn incorporated within a matrix composed of biodegradable material.

German Patent Document n. DE9308730 U1 defines an ice-cream container comprising at least a consumable moulded part consisting of particles of a puffed cereal material which are bound together by a binder for its thermal insulation.

Furthermore, the Patent Document n. WO 2020/126665 A1 relates to a mould comprising popcorn substantially surrounded by a polymer and, optionally, by a further binder, wherein the total proportion of polymer and binder is <20% (w/w) compared to the mould.

Finally, there are some proposals on the market for solving the problem of eco-sustainability of food containers made of expanded polystyrene, such as containers based on PLA (polylactic acid) or Mater-Bi type (a type of biodegradable plastic). However these solutions, although they try to propose themselves to solve the problem of environmental eco-sustainability of food and ice-cream containers in particular, are explicitly among the cases of products whose placing on the market is prohibited by the recent EU Directive 2019/904 of 05/06/2019 under the heading "oxo-degradable plastic materials". Furthermore, they require industrial production sites and therefore cannot be compatible with a "self-production" i.e. a "home-made" production by the users themselves, starting from materials which are low-cost, eco-sustainable and occupy very small volumes.

Therefore, in the specific sector, there is a need for biodegradable containers in particular compatible with the EU Directive 2019/904 of 05/06/2019 and adapted to be self-produced by the user

This need is satisfied by the biodegradable container according to the present invention which also offers further advantages which will become clear in the following.

The solution according to the present invention fits in this context, aiming to propose a container consisting of non-loose puffed cereals, i.e. with single grains puffed and pressed together to form a single matrix thanks to the aggregating effect of the starch of the grains themselves subjected to a short cooking process. Said process is compatible with the process for producing puffed cereal cakes and makes it possible to create a container which is completely biodegradable and compostable and capable of replacing the traditional containers made of plastic materials or cardboard. Likewise, an object of the present invention is to provide containers made of puffed and pressed cereals of different shapes and sizes, for example cylindrical or square in shape, but also having a different thickness, depending on the weight and type of food to be transported. For example, in case an ice cream is to be transported, it may be necessary to increase the thickness to obtain a greater thermal insulation from the external environment.

An aim of the present invention is therefore to provide a biodegradable container which makes it possible to overcome the limits of the containers according to the known technology and to obtain the technical results previously described.

A further aim of the invention is that of being able to make said biodegradable container at substantially low costs, both in terms of the production costs and in terms of the management costs.

Last but not the least aim of the invention is to propose a biodegradable container that is simple, safe and reliable.

Therefore, it is a first specific object of the present invention a biodegradable container comprising a structure with one or more layers of puffed and pressed cereal seeds, bound together by a quantity of starch of said cereal seeds, as defined in claim 1.

Further characteristics of the biodegradable container of the present invention are specified in the subsequent dependent claims 2-7.

It is also a second specific object of the present invention the use of said biodegradable container for storing and transporting foods, such as ice cream in particular, as defined in claim 8.

Finally, it is a third specific object of the present invention a method for manufacturing said biodegradable container as defined in claim 9.

Further characteristics of the method for manufacturing the biodegradable container of the present invention are specified in the subsequent dependent claim 10.

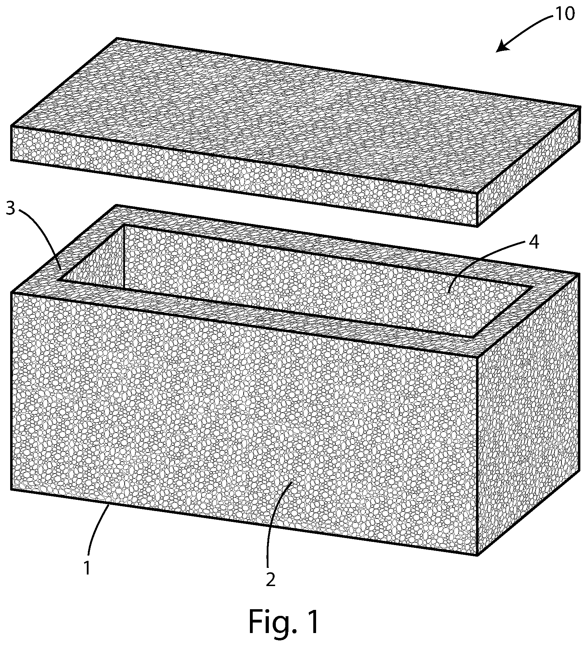

The present invention will now be described, for illustrative but not limitative purposes, according to a preferred embodiment thereof, with particular reference to the attached figure, which shows a perspective view of a biodegradable container according to the present invention.

Referring to the figure, the biodegradable container 10, object of the present invention, comprises a base structure 1 having a parallelepiped shape or the like made of a plurality of cereal seeds 2 puffed and pressed together, such as wheat seeds, rice, corn, oats and rye as well as minor cereals. In particular, said plurality of cereal seeds 2 can comprise seeds of the same type of cereals or of different types mixed together.

Within said base structure 1 a central empty space 4 or cavity is defined, wherein a food or any other good can be stored.

In the embodiment shown in the figure, said base structure 1 comprises four vertical walls 3 of variable thickness, positioned on a base having a resting surface for said food. In further embodiments, said walls 3 can be oblique, i.e. with a bending angle relative to the base greater than 90°. This characteristic makes it possible to stack said container 10 on a second container 10 so as to optimise the spaces where said containers 10 are stored.

Furthermore, said container 10 comprises an upper structure 5, used for closing the aforementioned base structure 1, in such a way that it can be stuck or simply placed thereon. Also said upper structure 5 is made of said puffed and pressed cereals 2.

Such biodegradable container 10 is therefore created starting from loose cereals, whose grains are bound together to form a single and compact structure by means of a process compatible with the typical traditional puffing and pressing processes for producing cereal cakes.

In particular, said base structure 1 of said biodegradable container 10 is made of a plurality of cereal seeds puffed and pressed together using a high-temperature cooking process, in particular a temperature comprised between 200°C and 270 °C and a pressure comprised between 15 and 55 kg/cm², inside suitable moulds defining its geometry and shape.

Furthermore, said biodegradable container 10 is perfectly eco-compatible, unlike traditional containers, and is able to fully comply with the regulations on eco-sustainability.

Furthermore, the materials that can be used for producing it are low cost, easily available, widespread and have reduced volumes.

In one embodiment, said biodegradable container 10 further comprises an internal biodegradable layer, capable of making the container impermeable to a wet food stored therein.

In particular, said internal biodegradable layer can be obtained using a process for producing a polymeric biofilm formed starting from chitosan and animal proteins, such as jellies, or vegetables, such as rice or milk proteins. The final plasticity of said biofilm is adjusted using appropriate dosages of glycerin. Such biofilm can be dried and subsequently applied mechanically on the substrate, so that its initial moisture does not come into contact with the substrate, i.e. it can be applied using other suitable application systems selected from those known.

In addition, by making changes to the production process and in particular to the cooking pressure and temperature, said cereals have a reduced content of acrolein and/or acrylamide.

Furthermore, said cereals, if burned, do not release toxic fumes from thermal degradation of plastic compounds or oxo-degradable plastics derived from petroleum.

An advantage of the present invention is that it complies with the current regulations in force according to the European Directive 2019/904 of 5 June 2019 on reducing the incidence of certain plastic products on the environment.

Another advantage of the present invention is allowing a self-production ("home-made" production), i.e. opening up the possibility that every food producer, in this case in particular every ice-cream shop or ice-cream producer, can be equipped with a reduced size and low cost machine so as to directly make the required containers, if necessary, also on a weekly and daily basis, on their own behalf. In this way it is possible to save the warehouse costs related to the storage of materials that coud not otherwise be avoided when using traditional containers made of polystyrene or oxo-degradable plastics, which instead should be purchased from large producers with a careful planning and the need for a large warehouse for the storage.

In fact, the biodegradable container 10 consisting of said puffed and pressed cereals 2 can be produced directly where it is used and does not require any industrial production plant, unlike the expanded polystyrene, or a logistic chain for the transport.

In particular, the production of a biodegradable container 10 comprising puffed and pressed cereals 2, according to the present invention, takes place in an apparatus for puffing and pressing cereals, suitably set and adjusted, using a method comprising the following steps:
- macerating a predetermined quantity of raw cereal seeds in water for about 12 hours, in order to eliminate part of the external starch, which dissolves in water and which in the subsequent steps would have hindered a massive expansion of the cereal;
- drying the cereals macerated in the previous step by placing them in a dry environment for further 12-24 hours, in order to adjust the moisture level of the cereal around values determined according to the subsequent steps;
- placing the cereals thus prepared on a mould made of metal material suitable to withstand the process parameters, such as steel, and having the desired shape;
- subjecting the cereals inside the mould to a temperature of about 200-270°C and a pressure of about 15-55 kg/cm², to cook the cereals, at the same time binding the individual seeds together by means of the starch which, due to the effect of the exerted temperature and pressure, comes out of the cereal seeds and combines them into a single mass of cereals;
- ejetting the mass of cereals formed in the previous step from the mould, in such a way as to cause a sudden drop in pressure and temperature, to obtain the immediate expansion of steam and air inside the individual cereal seeds, transforming them into cereals puffed and pressed together to form a single block of material having the shape and dimensions of the mould.

The semplicity of the apparatuses for puffing and pressing cereals allows them to be used directly by users who produce ice cream or other foods to produce the required biodegradable containers, using machines that are compatible or very similar to those used today for commercial cakes, with suitable moulds.

A further advantage of the present invention is represented by its chemical-physical characteristics, such as in particular the ability to serve as a thermal insulator and, moreover, such that in the event of an accident i.e. of fire, it would strongly limit the production of fumes, excluding the toxic fumes resulting from the thermal decomposition of plastic and oxo-degradable plastic materials deriving from petroleum and would also limit the spread of flames considerably limiting the risk of a fire spreading.

The present invention has been described for illustrative but not limitative purposes, according to its preferred embodiments, but it is to be understood that variations and/or modifications may be made by those skilled in the art without thereby departing from its scope of protection, as defined by the attached claims.

## Claims

1. A biodegradable container (10) **characterised in that** it comprises a structure with one or more layers of puffed and pressed cereal seeds, bound together by a quantity of starch of said cooked cereal seeds, said container (10) being obtained by a process comprising at least the following steps:
- macerating a predetermined quantity of raw cereals in water for about 12 hours, to eliminate part of the external starch;
- drying the cereals macerated in the previous step by placing them in a dry environment for further 12-24 hours, to adjust the moisture level of the cereal around values determined according to the subsequent steps;
- placing the cereals thus prepared on a metal mould;
- cooking the cereals binding the individual seeds together at a temperature of about 200-270°C and at a pressure comprised between 15 and 55 kg/cm2, to create a compact structure by binding the cereal seeds through the starch present in said seeds ;
- ejecting the cereals from the mould, causing a sudden drop in pressure and temperature, to obtain the immediate expansion of steam and air inside the individual cereal seeds, transforming them into cereals puffed and pressed together to form a single block of material having the shape and dimensions of the mould.

2. The biodegradable container (10), according to the preceding claim, **characterised in that** said structure comprises at least one base structure (1), which defines a central space (4).

3. The biodegradable container (10), according to the preceding claim, **characterised in that** said structure further comprises an upper structure (5) used to close said base structure (1), said upper structure (5) resting or being wedged on said base structure (1).

4. The biodegradable container (10) according to any one of the preceding claims, **characterised in that** said puffed and pressed cereals (2) are selected from wheat, rice, corn, oats or minor cereals or a mix of such cereals.

5. The biodegradable container (10) according to any one of the preceding claims, **characterised in that** the shape of said base structure (1) is selected from a parallelepiped, cube, cylinder or other stackable and/or groupable geometric shapes.

6. The biodegradable container (10) according to any one of the preceding claims, **characterised in that** said structure comprises an edible and/or food grade impermeable layer.

7. The biodegradable container (10) according to any one of the preceding claims, **characterised in that** it can be stacked on one or more biodegradable containers (10).

8. The use of a biodegradable container (10) according to any one of claims 1 - 7, for storing and transporting foods, such as ice cream.

9. The method for manufacturing a biodegradable container according to any one of claims 1 - 7 in an apparatus for puffing and pressing cereals, **characterised in that** it comprises the following steps:
- macerating a predetermined quantity of raw cereals in water for about 12 hours, to eliminate part of the external starch;
- drying the cereals macerated in the previous step by placing them in a dry environment for further 12-24 hours, to adjust the moisture level of the cereal around values determined according to the subsequent steps;
- placing the cereals thus prepared on a metal mould;
- cooking the cereals binding the individual seeds together at a temperature of about 200-270°C and at a pressure comprised between 15 and 55 kg/cm², to create a compact structure by binding the cereal seeds through the starch present in said seeds ;
- ejecting the cereals from the mould, causing a sudden drop in pressure and temperature, to obtain the immediate expansion of steam and air inside the individual cereal seeds, transforming them into cereals puffed and pressed together to form a single block of material having the shape and dimensions of the mould.

10. The method for manufacturing a biodegradable container according to the preceding claim, **characterised in that** it comprises the following step, prior to said step of drying the cereals:
- adding oils or fats or food and non-food additives to said cereals.

## Patentansprüche

1. Biologisch abbaubarer Behälter (10), **dadurch gekennzeichnet, dass** er eine Struktur mit einer oder mehreren Schichten aus gepufften und gepressten Getreidesamen umfasst, die durch eine Menge an Stärke der gekochten Getreidesamen miteinander verbunden sind, wobei der Behälter (10) durch ein Verfahren erhalten wird, das mindestens die folgenden Schritte umfasst:
- Einweichen einer bestimmten Menge Rohgetreide in Wasser für etwa 12 Stunden, um einen Teil der äußeren Stärke zu entfernen;
- Trocknen des im vorherigen Schritt mazerierten Getreides, indem es für weitere 12-24 Stunden in eine trockene Umgebung gebracht wird, um den Feuchtigkeitsgehalt des Getreides auf Werte einzustellen, die gemäß den nachfolgenden Schritten bestimmt wurden;
- das so vorbereitete Getreide auf eine Metallform legen;
- Kochen des Getreides, wobei die einzelnen Samen bei einer Temperatur von etwa 200-270°C und einem Druck zwischen 15 und 55 kg/cm2 zusammengebunden werden, um eine kompakte Struktur zu schaffen, indem die Getreidesamen durch die in ihnen enthaltene Stärke gebunden werden;
- Ausstoßen des Getreides aus der Form, wodurch ein plötzlicher Druck- und Temperaturabfall verursacht wird, um die sofortige Ausdehnung von Dampf und Luft im Inneren der einzelnen Getreidekörner zu erreichen, wodurch diese in gepufftes und zusammengepresstes Getreide umgewandelt werden, das einen einzigen Materialblock mit der Form und den Abmessungen der Form bildet.

2. Biologisch abbaubarer Behälter (10) nach dem vorhergehenden Anspruch, **dadurch gekennzeichnet, dass** die Struktur mindestens eine Basisstruktur (1) umfasst, die einen zentralen Raum (4) definiert.

3. Biologisch abbaubarer Behälter (10) nach dem vorhergehenden Anspruch, **dadurch gekennzeichnet, dass** die Struktur außerdem eine obere Struktur (5) umfasst, die zum Verschließen der Basisstruktur (1) verwendet wird, wobei die obere Struktur (5) auf der Basisstruktur (1) aufliegt oder verkeilt ist.

4. Biologisch abbaubarer Behälter (10) nach einem der vorhergehenden Ansprüche, **dadurch gekennzeichnet, dass** die gepufften und gepressten Cerealien (2) aus Weizen, Reis, Mais, Hafer oder kleineren Cerealien oder einer Mischung aus solchen Cerealien ausgewählt sind.

5. Biologisch abbaubarer Behälter (10) nach einem der vorhergehenden Ansprüche, **dadurch gekennzeichnet, dass** die Form der Basisstruktur (1) aus einem Parallelepiped, einem Würfel, einem Zylinder oder anderen stapelbaren und/oder gruppierbaren geometrischen Formen ausgewählt ist.

6. Biologisch abbaubarer Behälter (10) nach einem der vorhergehenden Ansprüche, **dadurch gekennzeichnet, dass** die Struktur eine essbare und/oder lebensmittelgerechte undurchlässige Schicht umfasst.

7. Biologisch abbaubarer Behälter (10) nach einem der vorhergehenden Ansprüche, **dadurch gekennzeichnet, dass** er auf einen oder mehrere biologisch abbaubare Behälter (10) gestapelt werden kann.

8. Verwendung eines biologisch abbaubaren Behälters (10) nach einem der Ansprüche 1-7 zur Lagerung und zum Transport von Lebensmitteln, wie z. B. Speiseeis.

9. Verfahren zur Herstellung eines biologisch abbaubaren Behälters nach einem der Ansprüche 1-7 in einer Vorrichtung zum Puffen und Pressen von Getreide, **dadurch gekennzeichnet, dass** es die folgenden Schritte umfasst:
- Einweichen einer bestimmten Menge Rohgetreide in Wasser für etwa 12 Stunden, um einen Teil der äußeren Stärke zu entfernen;
- Trocknen des im vorherigen Schritt mazerierten Getreides, indem es für weitere 12-24 Stunden in eine trockene Umgebung gebracht wird, um den Feuchtigkeitsgehalt des Getreides auf Werte einzustellen, die gemäß den nachfolgenden Schritten bestimmt wurden;
- das so vorbereitete Getreide auf eine Metallform legen;
- Kochen des Getreides, wobei die einzelnen Samen bei einer Temperatur von etwa 200-270°C und einem Druck zwischen 15 und 55 kg/cm² zusammengebunden werden, um eine kompakte Struktur zu schaffen, indem die Getreidesamen durch die in ihnen enthaltene Stärke gebunden werden;
- Ausstoßen des Getreides aus der Form, wodurch ein plötzlicher Druck- und Temperaturabfall verursacht wird, um die sofortige Ausdehnung von Dampf und Luft im Inneren der einzelnen Getreidekörner zu erreichen, wodurch diese in gepufftes und zusammengepresstes Getreide umgewandelt werden, das einen einzigen Materialblock mit der Form und den Abmessungen der Form bildet.

10. Verfahren zur Herstellung eines biologisch abbaubaren Behälters nach dem vorhergehenden Anspruch, **dadurch gekennzeichnet, dass** es vor dem Schritt des Trocknens des Getreides den folgenden Schritt umfasst: - Zugabe von Ölen oder Fetten oder von Lebensmittel- und Nichtlebensmittelzusatzstoffen zu diesem Getreide.

## Revendications

1. Conteneur biodégradable (10) **caractérisé en ce qu'**il comprend une structure avec une ou plusieurs couches de graines de céréales soufflées et pressées, liées entre elles par une quantité d'amidon desdites graines de céréales cuites, ledit conteneur (10) étant obtenu par un procédé comprenant au moins les étapes suivantes:
- la macération d'une quantité prédéterminée de céréales brutes dans de l'eau pendant environ 12 heures, afin d'éliminer une partie de l'amidon externe;
- sécher les céréales macérées à l'étape précédente en les plaçant dans un environnement sec pendant 12-24 heures supplémentaires, afin d'ajuster le taux d'humidité des céréales autour des valeurs déterminées au cours des étapes suivantes;
- placer les céréales ainsi préparées sur un moule métallique;
- cuire les céréales en liant les graines individuelles entre elles à une température d'environ 200-270°C et à une pression comprise entre 15 et 55 kg/cm2, pour créer une structure compacte en liant les graines de céréales par l'intermédiaire de l'amidon présent dans lesdites graines;
- éjecter les céréales du moule, en provoquant une chute brutale de la pression et de la température, afin d'obtenir l'expansion immédiate de la vapeur et de l'air à l'intérieur des graines de céréales individuelles, les transformant en céréales soufflées et pressées les unes contre les autres pour former un seul bloc de matériau ayant la forme et les dimensions du moule.

2. Conteneur biodégradable (10), selon la revendication précédente, **caractérisé en ce que** ladite structure comprend au moins une structure de base (1), qui définit un espace central (4).

3. Conteneur biodégradable (10), selon la revendication précédente, **caractérisé en ce que** ladite structure comprend en outre une structure supérieure (5) utilisée pour fermer ladite structure de base (1), ladite structure supérieure (5) reposant ou étant calée sur ladite structure de base (1).

4. Conteneur biodégradable (10) selon l'une quelconque des revendications précédentes, **caractérisé par le fait que** les céréales soufflées et pressées (2) sont choisies parmi le blé, le riz, le maïs, l'avoine ou les céréales mineures ou un mélange de ces céréales.

5. Conteneur biodégradable (10) selon l'une quelconque des revendications précédentes, **caractérisé en ce que** la forme de ladite structure de base (1) est choisie parmi un parallélépipède, un cube, un cylindre ou d'autres formes géométriques empilables et/ou groupables.

6. Conteneur biodégradable (10) selon l'une quelconque des revendications précédentes, **caractérisé en ce que** ladite structure comprend une couche imperméable comestible et/ou de qualité alimentaire.

7. Conteneur biodégradable (10) selon l'une quelconque des revendications précédentes, **caractérisé par le fait qu'**il peut être empilé sur un ou plusieurs conteneurs biodégradables (10).

8. Utilisation d'un conteneur biodégradable (10) selon l'une des revendications 1-7, pour le stockage et le transport d'aliments, tels que la crème glacée.

9. Procédé de fabrication d'un conteneur biodégradable selon l'une des revendications 1-7 dans un appareil de soufflage et de pressage de céréales, **caractérisé en ce qu'**il comprend les étapes suivantes:
- la macération d'une quantité prédéterminée de céréales brutes dans de l'eau pendant environ 12 heures, afin d'éliminer une partie de l'amidon externe;
- sécher les céréales macérées à l'étape précédente en les plaçant dans un environnement sec pendant 12-24 heures supplémentaires, afin d'ajuster le taux d'humidité des céréales autour des valeurs déterminées au cours des étapes suivantes;
- placer les céréales ainsi préparées sur un moule métallique;
- cuire les céréales en liant les graines individuelles entre elles à une température d'environ 200-270°C et à une pression comprise entre 15 et 55 kg/cm², pour créer une structure compacte en liant les graines de céréales par l'intermédiaire de l'amidon présent dans lesdites graines;
- éjecter les céréales du moule, en provoquant une chute brutale de la pression et de la température, afin d'obtenir l'expansion immédiate de la vapeur et de l'air à l'intérieur des graines de céréales individuelles, les transformant en céréales soufflées et pressées les unes contre les autres pour former un seul bloc de matériau ayant la forme et les dimensions du moule.

10. Procédé de fabrication d'un conteneur biodégradable selon la revendication précédente, **caractérisé en ce qu'**il comprend l'étape suivante, avant ladite étape de séchage des céréales:
- l'ajout d'huiles ou de graisses ou d'additifs alimentaires et non alimentaires auxdites céréales.
